Europäisches Patentamt

European Patent Office

Office européen des brevets

(11) Veröffentlichungsnummer: **0 018 308**
A1

# EUROPÄISCHE PATENTANMELDUNG

(21) Anmeldenummer: 80730015.7

(22) Anmeldetag: 22.02.80

(51) Int. Cl.³: **G 03 B 15/05**, G 03 B 7/16, H 05 B 41/32

(30) Priorität: 22.02.79 DE 2906880

(43) Veröffentlichungstag der Anmeldung: 29.10.80
Patentblatt 80/22

(84) Benannte Vertragsstaaten: **FR GB SE**

(71) Anmelder: **Braun Aktiengesellschaft, Rüsselsheimer Strasse 22, D-6000 Frankfurt/Main (DE)**

(72) Erfinder: **Adler, Bernhard, Alt Bornheim 22, D-6000 Frankfurt/Main (DE)**
Erfinder: **Dietrich, Rolf, Breckenheimer Strasse 20, D-6238 Hofheim (DE)**

(74) Vertreter: **Einsele, Rolf, Braun Aktiengesellschaft Postfach 1120, D-6242 Kronberg/Taunus (DE)**

(54) Elektronenblitzgerät mit automatischer Lichtmengendosierung und Verfahren zum Betrieb.

(57) Gegenstand der Erfindung ist ein Elektronen-Blitzgerät mit automatischer Lichtmengendosierung und einem in Reihe zur Blitzröhre (6) liegenden ein- und ausschaltbaren Thyristor (GTO-Thyristor) (8), dessen Steuerelektrode mittels einer Schalteinrichtung auf definiertes Potential gelegt werden kann, wobei die Anode des GTO-Thyristors (8) mittelbar oder unmittelbar mit der Kathode der Blitzröhre (6) und die Kathode des GTO-Thyristors (8) mittelbar oder unmittelbar mit festem Bezugspotential verbunden oder verbindbar ist. Wahlweise kann parallel zum GTO-Thyristor (8) die Reihenschaltung eines Kommutierungskondensators (50) mit einem Thyristor (55) angeordnet werden. Der Thyristor (55) und der GTO-Thyristor (8) werden in der Weise angesteuert, daß im Bereich großer Blitzröhren-Ströme der Thyristor (55) und im Bereich kleiner Blitzröhren-Ströme der GTO-Thyristor (8) zur Ausschaltung des Blitzröhren-Stromes angesteuert werden.

Die Erfindung betrifft ein Elektronenblitzgerät nach dem Oberbegriff des Patentanspruchs 1.

Bei neueren Elektronenblitzgeräten wird die gezündete Blitzröhre dann gelöscht, wenn die reflektierte Lichtmenge ausreichend ist, um ein Bild zu belichten. Die Löschung der Blitzröhre wird dabei mit Hilfe eines in Serie zur Blitzröhre geschalteten Thyristors vorgenommen, für den eine eigene Kommutierungsschaltung vorgesehen ist. Diese Kommutierungsschaltung ist erforderlich, um den einmal gezündeten Thyristor durch Umpolen der Anoden-Kathoden-Spannung in den nichtleitenden Zustand zu bringen. Es ist ersichtlich, daß die Kommutierungsschaltung einen Aufwand darstellt, der die Herstellungskosten eines Blitzgerätes verteuert.

Zur Reduzierung dieses Aufwands wurde bereits vorgeschlagen, für die Serienabschaltung von Blitzröhren einen speziellen Halbleiterschalter zu verwenden, der nur über seine Steuerelektrode an- bzw. abgeschaltet werden kann (US-PS 3 857 064). Allerdings sind hierbei keine näheren Angaben über den Aufbau und die Anordnung der Halbleiterschalter gemacht.

Der Erfindung liegt deshalb die Aufgabe zugrunde, Schaltungsanordnungen zu schaffen, mit denen ein konkreter Halbleiterschalter gesperrt und geöffnet werden kann.

Diese Aufgabe wird gemäß den kennzeichnenden Merkmalen des Patentanspruchs 1 gelöst.

Der mit der Erfindung erzielte Vorteil besteht insbesondere darin, daß die bei herkömmlichen Schaltungsanordnungen durch den Kommutierungskondensator auftretenden Umladungsverluste vermieden werden und im Nahentfernungsbereich eine bessere Arbeitsweise erzielt wird.

Eine weitere erfindungsgemäße Lösung der gestellten Aufgabe wird durch die Kennzeichen der Patentansprüche 15 und 16 angegeben.

Ein Verfahren zum Betrieb einer Anordnung gemäß Patentansprüchen 15 und 16 ist durch die kennzeichnenden Merkmale des Patentanspruchs 17 gegeben.

Der mit dieser Lösung erzielbare Vorteil besteht darin, daß bei kürzerer Blitzdauer eine schnellere Blitzfolge möglich ist, da der zum Abschalten größerer Blitzströme erforderliche Kommutierungskondensator nicht aufgeladen zu werden braucht. Zusätzlich ist eine geringere vordere Grenzentfernung möglich, da der Kommutierungskondensator zunächst nicht umgeladen werden muß. Außerdem kann der Kommutierungskondensator kleiner bemessen werden, da im Bereich kleiner Blitzröhrenströme die Abschaltung der Blitzröhre mittels des GTO-Thyristors erfolgt.

Ausführungsbeispiele der Erfindung sind in der Zeichnung dargestellt und werden im folgenden näher beschrieben.

Es zeigen:

Fig. 1  eine Schaltungsanordnung für ein Elektronenblitzgerät mit einem Serien-GTO-Thyristor;

Fig. 2  eine über Transistoren steuerbare Serien-GTO-Thyristor-Schaltung;

Fig. 3  einen mit einem Zündtransformator verbundenen GTO-Thyristor;

Fig. 4  eine Anordnung zum Abschalten einer Blitzröhre mittels eines GTO-Thyristors mit parallel geschalteter Reihenschaltung von Kommutierungskondensator und Thyristor und

Fig. 5  die zeitliche Darstellung der Blitzröhren-Entladekennlinie mit der zugehörigen Kommutierungs-Auswahlkennlinie.

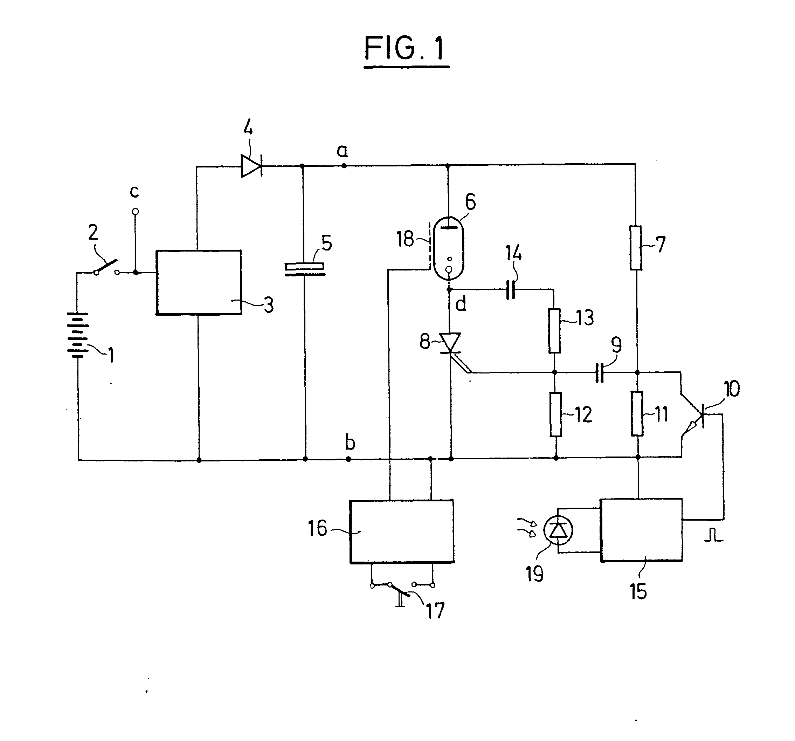

In der Fig. 1 ist der Grundschaltplan eines Elektronenblitzgeräts dargestellt. Die Energieversorgung dieses Elektronenblitzgeräts erfolgt über eine Batterie 1, die über einen Hauptschalter 2 mit einem Gleichspannungs/Wechselspannungs-Wandler 3 verbindbar ist. In Serie zu dem Gleichspannungs/Wechselspannungs-Wandler 3 ist eine Diode 4 geschaltet, die mit ihrer Kathode an einen Speicherkondensator 5, an die Anode einer Blitzlampe 6 und einen Widerstand 7 angeschlossen ist.

Die Kathode der Blitzröhre 6 ist mit der Anode eines GTO-Thyristors 8 (GTO = Gate - Turn-Off) verbunden, dessen Steuerelektrode über einen Löschkondensator 9 an dem Kollektor eines Transistors 1o liegt. Parallel zur Kollektor-Emitter-Strecke des Transistors 1o ist ein Widerstand 11 geschaltet, der mit seinem einen Anschluß an dem Löschkondensator 9 und dem Widerstand 7 und mit seinem anderen Anschluß an einem Widerstand 12 liegt. Dieser Widerstand 12 ist mit einem weiteren Widerstand 13 verbunden, wobei an den Verbindungspunkt zwischen den beiden Widerständen 12, 13 der Löschkondensator 9 und die Steuerelektrode des GTO-Thyristors 8 angeschlossen sind. Von der Anode des GTO-Thyristors 8 führt über einen Zündkondensator 14 eine Verbindung zu dem Widerstand 13, so daß parallel zur Anoden-Kathoden Strecke des Thyristors 8 die Reihenschaltung aus Kondensator 14 und den Widerständen 13, 12 liegt.

Die Basis des Transistors 1o ist mit einem Lichtmeßkreis 15 verbunden, der mit einem lichtempfindlichen Sensor 19 gekoppelt ist. Schließlich ist auch noch ein Triggerschaltkreis 16 mit einem Auslösekontakt 17 vorgesehen, der mit der Zündelektrode 18 der Blitzröhre 6 verbunden ist.

Im folgenden wird die grundsätzliche Wirkungsweise der Schaltungsanordnung nach Fig. 1 beschrieben. Hierzu wird davon ausgegangen, daß im Ausgangszustand der Schaltungsanordnung der Hauptschalter 2 geschlossen ist und der Speicherkondensator 5 auf eine hohe Gleichspannung aufgeladen wird. Der GTO-Thyristor 8 ist zunächst gesperrt. Wird nun der Auslösekontakt 17 geschlossen, so liefert der Triggerschaltkreis 16 einen Hochspannungszündimpuls an die Zündelektrode 18 der Röhre 6 und diese wird - nach Ablauf ihrer Zündverzögerungszeit - leitend. Dadurch wird der Zündkondensator 14 aufgeladen, und am Spannungsteiler 12/13 entsteht ein Spannungsabfall.

Der positive Spannungsimpuls am Widerstand 12 gelangt an die Steuerelektrode des GTO-Thyristors 8, worauf dieser leitend wird.

Der Fotosensor 19 empfängt das vom Lichtblitz der Röhre 6 am aufzunehmenden Objekt reflektierte Licht und wandelt dieses in eine elektrische Größe um. Hat die reflektierte Lichtmenge einen vorgegebenen
Wert erreicht, so liefert die Lichtmeßschaltung 15 einen positiven
Impuls an die Basis des Transistors 1o. Dadurch wird der Transistor 1o
leitend und legt den zuvor über den Spannungsteiler 13/12 zuvor auf
positives Potential aufgeladenen Belag des Kondensators 14 kurzfristig
an Masse. Dies bewirkt wiederum, daß die Steuerelektrode des GTO-
Thyristors 8 ein gegenüber der Kathode negatives Potential erhält, das
den GTO-Thyristor 8 abschaltet. Der Transistor 1o muß so lange durchgesteuert bleiben, bis die Sperrverzögerungszeit des Thyristors 8 vorbei
und der Hauptladekreis (5, 6, 8) stromlos ist, der GTO-Thyristor also
abgeschaltet hat.

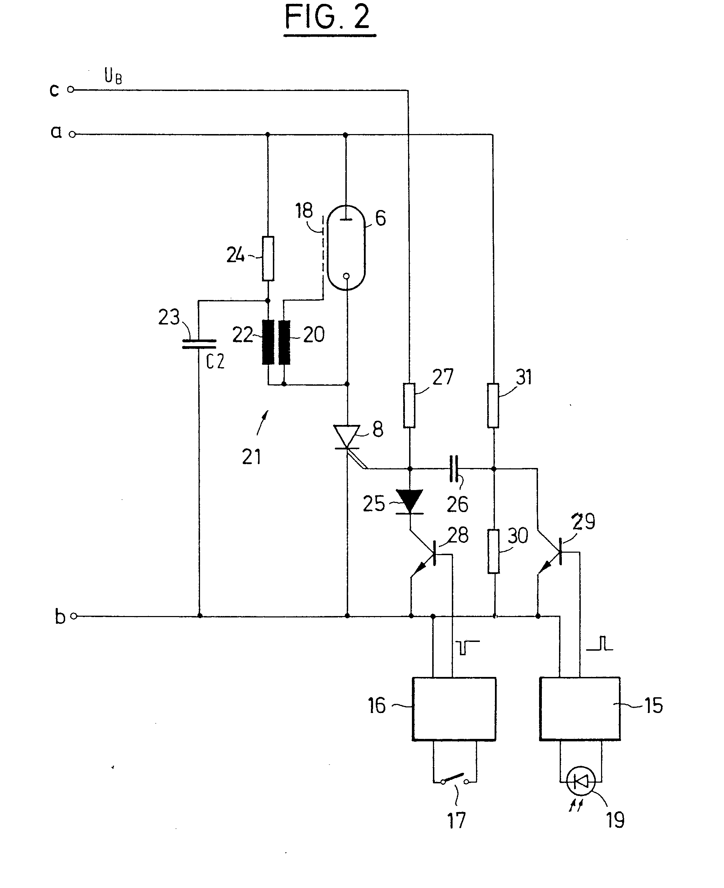

In der Fig. 2 sind die wesentlichen Bauelemente einer weiteren Schaltungsanordnung über ein Elektronenblitzgerät dargestellt. Es ist hierbei wieder eine Blitzröhre 6 vorgesehen, die in Reihe zu einem GTO-
Thyristor 8 liegt. Die Zündelektrode 18 der Blitzröhre 6 ist an eine
Wicklung 2o eines Zündtransformators 21 angeschlossen, dessen zweite
Wicklung 22 mit ihrem einen Anschluß an einem Zündkondensator 23 und an
einem Widerstand 24 liegt, während sie mit ihrem anderen Anschluß an
die erste Wicklung angeschlossen ist.

Von der Steuerelektrode des GTO-Thyristors 8 führt eine Verbindung auf
die Anode einer Schutzdiode 25 sowie auf einen Löschkondensator 26 und
einen Widerstand 27, wobei die Kathode der Diode 25 an den Kollektor
eines Transistors 28 angeschlossen ist. Die Basis dieses Transistors
28 ist mit dem Zündschaltkreis 16 verbunden, der einen Auslöseschalter
17 aufweist.

Es ist noch ein weiterer Transistor vorgesehen, zu dessen Basis-Emitter-
Strecke ein Widerstand 3o parallel geschaltet ist, wobei die Steuerelektrode des Transistors 29 an einer Lichtmeßeinrichtung 15 mit einem lichtempfindlichen Sensor 19 liegt. Von dem Kollektor des Transistors 29 führt noch eine Verbindung zu einem Widerstand 31, der an die Anode der Blitzröhre angeschlossen ist.

Der Ausgangszustand der Schaltungsanordnung gemäß Fig. 2 ist derselbe wie derjenige der Fig. 1. Wird nun der Auslöseschalter 17 geschlossen, so liefert der Zündschaltkreis 16 einen Sperrimpuls auf die Basis des Transistors 28. Dieser Transistor 28 sperrt hierauf für die Dauer des Impulses, wodurch die Steuerelektrode des GTO-Thyristors 8 über den Widerstand 27 an positives Batteriepotential gelegt wird. Hierauf zündet der Thyristor 8 und der Zündkondensator 23 kann sich über die Wicklung 22 des Zündtransformators 21 entladen. An der Sekundärwicklung 2o entsteht ein Hochspannungszündimpuls, wodurch die Blitzröhre 6 leitend wird. Dabei ist sichergestellt, daß der Entladestrom vom Zündkondensator 23 über den GTO-Thyristor 8 während der Zündverzugszeit der Blitzröhre 6 nicht unter den Haltestrom des GTO-Thyristors 8 sinkt.

Die Löschung des GTO-Thyristors 8 erfolgt auf dieselbe Weise - wie im Zusammenhang mit der Fig. 1 bereits beschrieben - mit Hilfe der Lichtmeßschaltung 15 und des Transistors 29. Die Diode 25 verhindert dabei, daß sich der negative Belag des Kondensators 26 über den Transistor 28 entladen kann.

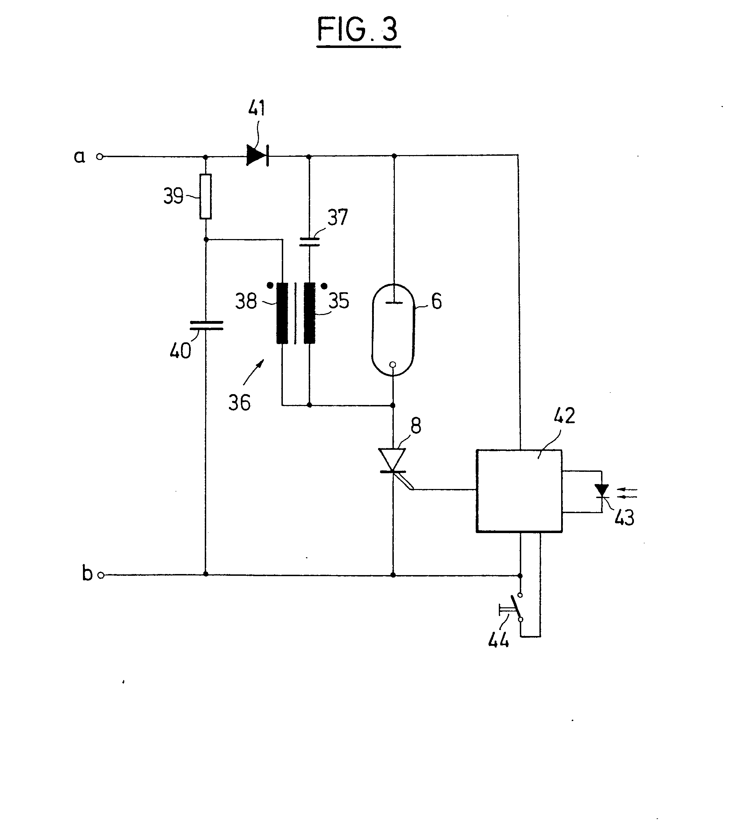

In der Fig. 3 ist eine weitere Schaltungsvariante gemäß der Erfindung gezeigt. Blitzröhre 6 und GTO-Thyristor 8 sind hierbei wieder in Serie geschaltet, wobei parallel zur Anoden-Kathoden-Strecke der Blitzröhre 6 eine Reihenschaltung aus einer Sekundärwicklung 35 eines Zündtransformators 36 und einem Kondensator 37 vorgesehen ist. Der mit der Kathode der Blitzröhre 6 verbundene Anschluß dieser Sekundärwicklung 35 ist auch noch mit dem unteren Anschluß einer Primärwicklung 38 des Zündtransformators 36 sowie mit der Anode des Thyristors 38 verbunden. Von dem oberen Anschluß der Primärwicklung 38 führt eine Verbindung zu einem Widerstand 39 und einem Kondensator, wobei der Kondensator 4o mit seinem anderen Anschluß mit der Kathode des Thyristors 8 und der Widerstand 39 mit seinem anderen Anschluß mit der Anode einer Diode 41 verbunden ist. Die Kathode dieser Diode 41 ist an den Kondensator 37 bzw. an die Anode der Röhre 6 angeschlossen. Eine Ansteuerschaltung 42, die mit einem lichtempfindlichen Sensor 43 gekoppelt ist, ist mit der Steuerelektrode des Thyristors 8 verbunden, wobei auch noch ein Auslöseschalter 44 vorgesehen ist, zur Ansteuerschaltung 42 führt.

Wird der GTO-Thyristor 8 über die Ansteuerschaltung 42, die praktisch einen Trigger und eine Lichtmeßeinrichtung enthält, gezündet, so entlädt sich der Zündkondensator 4o über die Primärwicklung 38 des Zündtransformators 36, wodurch in der Sekundärwicklung eine hohe Spannung induziert wird, die über den Kondensator 37 parallel zu den Hauptelektroden der Blitzröhre 6 liegt. Diese Spannung reicht aus, um die Blitzröhre zu zünden. Die Diode 41 verhindert dabei, daß die hohe Zündspannung über den nicht dargestellten Hauptkondensator und den leitenden Thyristor 8 kurzgeschlossen werden kann.

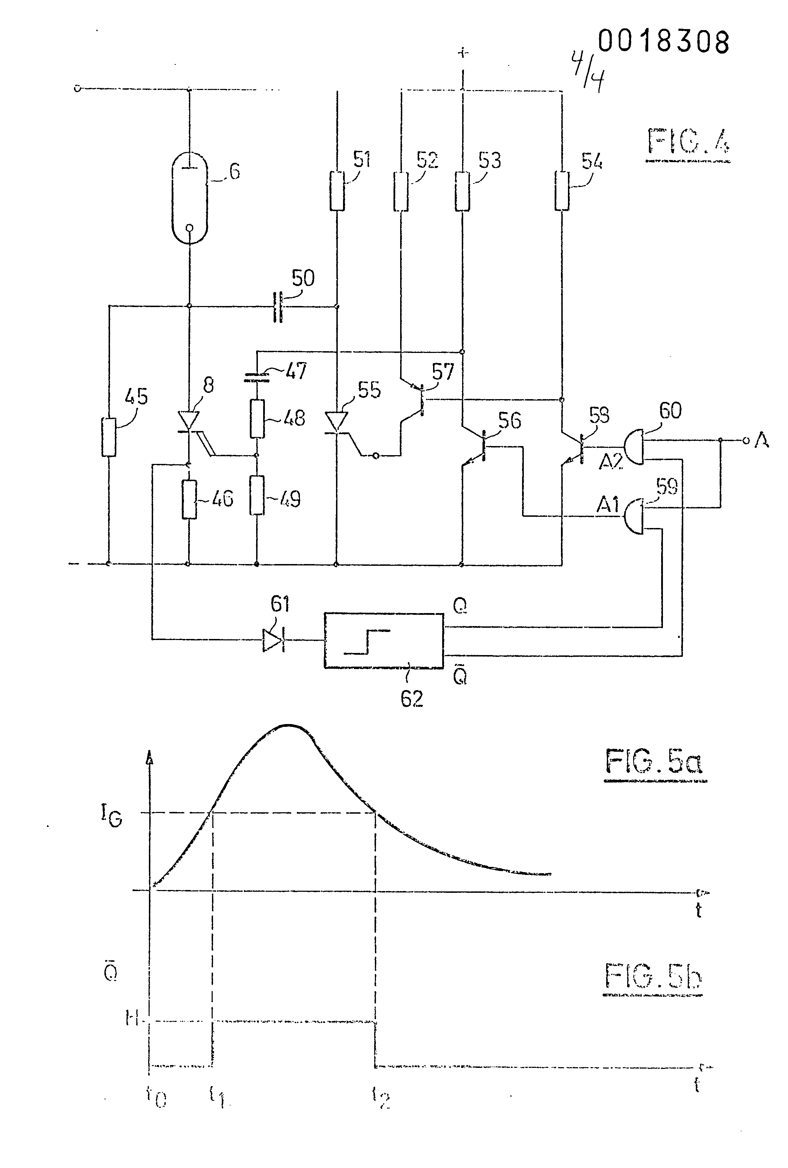

Das in Fig. 4 dargestellte Ausführungsbeispiel der Erfindung weist eine Blitzröhre 6 mit in Reihe geschaltetem GTO-Thyristor 8 sowie einen Strommeßwiderstand 46 auf. Parallel zu der Reihenschaltung von GTO-Thyristor 8 und Strommeßwiderstand 46 ist sowohl die Reihenschaltung eines Kommutierungskondensators 5o mit einem Thyristor 55 als auch ein Widerstand 45 geschaltet. Der Kommutierungskondensator 5o ist zusammen mit einem in Reihe geschalteten Widerstand 51 parallel zur Blitzröhre 6 geschaltet. Der Steueranschluß des GTO-Thyristors 8 ist über einen Spannungsteiler mit den Widerständen 48 und 49 sowie einem Kondensator 47 an den Kollektor eines ersten Transistors 56 angeschlossen, dessen Basis mit dem Ausgang eines ersten UND-Gatters 59 verbunden ist. Der Steueranschluß des Thyristors 55 ist mit dem Kollektor eines zweiten Transistors 57 verbunden, dessen Basis an den Kollektor eines dritten Transistors 58 angeschlossen ist. Die Basis dieses dritten Transistors 58 ist mit dem Ausgang A2 eines zweiten UND-Gatters 6o verbunden. Die Kollektoren des ersten und dritten Transistors 56 und 58 sind über Widerstände 53 und 54 mit dem positiven Pol der Spannungsquelle verbunden während der Emitter des zweiten Transistors 57 über einen Widerstand 52 an diesem positiven Pol angeschlossen ist. Die Emitter des ersten und dritten Transistor 56 und 58 sind ebenso wie die Kathode des Thyristors 55 sowie der eine Anschluß des Strommeßwiderstandes 46 und des Spannungsteilers-Widerstandes 49 an Bezugspotential angeschlossen.

Je ein Eingang der beiden UND-Gatter 59 und 6o ist mit dem Abschaltsignal-Anschluß A verbunden, während die beiden anderen Eingänge der beiden UND-Gatter 59 und 6o an den Ausgang Q beziehungsweise den ne-gierten Ausgang $\bar{Q}$ einer Triggerschaltung 62 angeschlossen sind. Der Eingang dieser Triggerschaltung 62 ist über eine Diode 61 an die Verbindung der Kathode des GTO-Thyristors 8 mit dem Strommeßwiderstand 46 angeschlossen. Je nach Höhe des an dieser Stelle gemessenen Blitzröhren-Stromes gibt die Triggerschaltung 62 ein Signal an das erste beziehungsweise zweite UND-Gatter 59 beziehungsweise 6o ab, die bei Vorliegen eines Abschaltsignales am Anschluß A über ihre Ausgänge $A_1$ beziehungsweise $A_2$ sowie die betreffenden Transistoren den Steueranschluß des Thyristors 55 beziehungsweise des GTO-Thyristors 8 ansteuern.

Die Funktionsweise der Anordnung nach Fig. 4 soll anhand der zeitlichen Darstellungen in den Figuren 5a und 5b näher erläutert werden.

In Fig. 5a ist eine typische Entladekennlinie eines Blitzgerätes dargestellt. Der Blitzröhren-Strom steigt nach dem Einschalten des Blitzkondensators steil an und fällt nach Erreichen des Maximums in etwa exponential ab. Gibt man einen bestimmten Blitzröhren-Strom $I_G$ vor, so läßt sich die Kennlinie in einen Bereich größer $I_G$ und einen Bereich kleiner $I_G$ aufteilen. Entsprechend diesem Ausführungsbeispiel der Erfindung wird nun das durch das Computer-Steuersignal veranlaßte Ausschalten des Blitzröhren-Stromes im Bereich kleiner $I_G$ mittels des GTO-Thyristors 8 und im Bereich größer $I_G$ mittels des Kommutierungskondensators 5o mit in Reihe geschaltetem Thyristor 55 bewerkstelligt. Die zu diesem Zweck erforderlichen Triggersignale für den GTO-Thyristor 8 beziehungsweise den Thyristor 55 sind in Fig. 5b anhand des negierten Ausgangssignals $\bar{Q}$ der Triggerschaltung 62 dargestellt. Im Zeitbereich $t_o - t_1$ ist das negierte Ausgangssignal $\bar{Q}$ der Triggerschaltung 62 Null, das heißt, in diesem Bereich ist das Ausgangssignal Q auf H-Potential. Damit steht an dem einen Eingang des ersten UND-Gatters 59 ein Signal an, so daß dieses UND-Gatter bei vorhandenem Abschaltsignal A den GTO-Thyristor 8 ansteuert. Im Zeitbereich $t_1 - t_2$, das heißt, im Bereich großer Blitzröhren-Ströme, liegt das negierte Ausgangssignal $\bar{Q}$ der

Triggerschaltung 62 auf H-Potential, so daß an einem Eingang des zweiten UND-Gatters 6o ein Signal ansteht und der Ausgang $A_2$ dieses UND-Gatters bei vorhandenem Abschaltsignal A den Thyristor 55 ansteuert. Vom Zeitpunkt $t_2$ ab bis zum Ende der Entladung wiederum befindet sich der negierte Ausgang $\bar{Q}$ der Triggerschaltung 62 auf Null-Potential und der Ausgang Q der Triggerschaltung 62 auf H-Potential, so daß von diesem Zeitpunkt ab erneut der GTO-Thyristor 8 angesteuert wird.

Mit dieser erfindungsgemäßen Anordnung wird somit erreicht, daß im Bereich kleinerer Blitzröhren-Ströme (kleiner als $I_G$) die Abschaltung des Blitzröhren-Stromes mittels des GTO-Thyristors 8 und im Bereich großer Blitzröhren-Ströme (größer als $I_G$) die Abschaltung des Blitzröhren-Stromes mittels des Thyristors 55 mit in Reihe geschaltetem Kommutierungskondensator 5o erfolgt.

Eine gewerbliche Verwertung und Anwendung der Erfindung ist bei dem Einsatz der Schaltung in lichtmengen-gesteuerten und -geregelten Elektronen-Blitzgeräten gegeben.

Elektronenblitzgerät mit automatischer Lichtmengendosierung

Patentansprüche

1. Elektronenblitzgerät mit automatischer Lichtmengendosierung und einem in Reihe zur Blitzröhre liegenden Halbleiterschalter, der über eine Steuerelektrode leitend und nicht-leitend geschaltet werden kann, dadurch gekennzeichnet, daß als elektronischer Halbleiterschalter ein ein- und ausschaltbarer Thyristor (8) (GTO-Thyristor) vorgesehen ist, dessen Steuerelektrode mittels einer Schalteinrichtung (1o, 15; 29, 15; 25, 28, 16) auf definiertes Potential gelegt werden kann, wobei die Anode des GTO-Thyristors (8) mittelbar oder unmittelbar mit der Kathode der Blitzröhre (6) und die Kathode des GTO-Thyristors (8) mittelbar oder unmittelbar mit festem Bezugspotential verbunden oder verbindbar ist.

2. Elektronenblitzgerät nach Anspruch 1, dadurch gekennzeichnet, daß der GTO-Thyristor (8) mit seiner Steuerelektrode mittelbar oder unmittelbar an einer Einrichtung (13, 14) liegt, welche eine dem Ionisierungszustand der Blitzröhre (6) entsprechende elektrische Größe abgibt und daß der GTO-Thyristor (8) bei einer bestimmten Amplitude der elektrischen Größe zündet.

3. Elektronenblitzgerät nach Anspruch 2, dadurch gekennzeichnet, daß die Steuerelektrode des GTO-Thyristors (8) über eine Reihenschaltung aus einem Widerstand (13) und einem Kondensator (14) mit dem Kathodenanschluß der Blitzröhre (6) verbunden ist.

4. Elektronenblitzgerät nach Anspruch 2, dadurch gekennzeichnet, daß die Steuerelektrode des GTO-Thyristors (6) über einen Widerstand (13) mit dem Kathodenanschluß der Blitzröhre (6) verbunden ist.

5. Elektronenblitzgerät nach Anspruch 1, dadurch gekennzeichnet, daß parallel zur Anoden-Kathoden-Strecke des GTO-Thyristors (8) ein Spannungsteiler (12, 13) vorgesehen ist, an dem nach dem Leitendwerden der Blitzröhre (6) eine Spannung abfällt, wobei mindestens ein Teil dieser Spannung der Steuerelektrode des Thyristors (8) zugeführt wird, die diesen leitend macht.

6. Elektronenblitzgerät nach Anspruch 1, dadurch gekennzeichnet, daß zur Abschaltung des GTO-Thyristors (8) ein Transistor (1o) vorgesehen ist, der von der Lichtdosierungsvorrichtung (15) angesteuert wird und hierauf ein bestimmtes Potential an die Steuerelektrode des GTO-Thyristors (8) legt.

7. Elektronenblitzgerät nach Anspruch 1, dadurch gekennzeichnet, daß eine mit einer Zündelektrode (18) der Blitzröhre (6) verbundene Sekundärwicklung (2o) eines Zündtransformators (21) vorgesehen ist, wobei die Primärseite (22) des Zündtransformators (21) mit einem Kondensator (23) und mit der Anode des GTO-Thyristors (8) verbunden ist.

8. Elektronenblitzgerät nach Anspruch 1, dadurch gekennzeichnet, daß parallel zur Anoden-Kathoden-Strecke der Blitzröhre (6) eine Reihenschaltung aus einem Kondensator (37) und der Sekundärwicklung eines Transformators (36) vorgesehen ist, wobei die Primärwicklung (38) dieses Transformators (36) mit der Anode des GTO-Thyristors (8) verbunden ist.

9. Elektronenblitzgerät nach den Ansprüchen 7 und 8, dadurch gekennzeichnet, daß die Entladungsdauer des Kondensators (23, 4o) bis zum Erreichen des Haltestroms des GTO-Thyristors (8) länger als die Zündverzögerungszeit der Blitzröhre (6) ist.

10. Elektronenblitzgerät nach Anspruch 1, dadurch gekennzeichnet, daß zur Zündung des GTO-Thyristors (8) eine Triggerschaltung (16) vorgesehen ist, welche die Basis eines Transistors (28) ansteuert, dessen Kollektor über eine Diode (25) mit der Steuerelektrode des GTO-Thyristors (8) verbunden ist.

11. Elektronenblitzgerät nach Anspruch 1, dadurch gekennzeichnet, daß zur Abschaltung des GTO-Thyristors (8) eine Lichtmeßschaltung (15) vorgesehen ist, die einen Transistor (29) ansteuert, der den positiv aufgeladenen Belag eines Kondensators (26) gegen Masse oder Kathodenpotential des GTO-Thyristors (8) schaltet und so dem Steueranschluß des GTO-Thyristors (8) ein negatives Potential gegenüber dem Kathodenanschluß zum Abschalten des Thyristors (8) gegeben wird, wodurch der Stromfluß durch die Blitzröhre (6) unterbunden wird.

12. Elektronenblitzgerät nach Anspruch 11, dadurch gekennzeichnet, daß die Basis des Transistors (29) mit einem Signal aus einer elektrischen Schaltung beaufschlagt wird, die eine konstante Lichtmengenabgabe der Blitzröhre (6) bestimmt.

13. Elektronenblitzgerät nach Anspruch 1, dadurch gekennzeichnet, daß zum Löschen des GTO-Thyristors (6) so lange negatives Potential an seiner Steuerelektrode liegt, bis der Hauptstrom abgeschaltet ist.

14. Elektronenblitzgerät nach Anspruch 8, dadurch gekennzeichnet, daß zwischen der Anode der Blitzröhre (6) und der Energieversorgungsquelle eine Diode (41) vorgesehen ist.

15. Anordnung nach Anspruch 1, dadurch gekennzeichnet, daß parallel zum GTO-Thyristor (8) die Reihenschaltung eines Kondensators (5o) und eines Thyristors (55) geschaltet ist.

16. Anordnung nach Anspruch 15, dadurch gekennzeichnet, daß der Eingang eine Triggerschaltung (62) zwischen der Kathode des GTO-Thyristors (8) und einem in Reihe zum GTO-Thyristor (8) geschalteten Strommeßwiderstand (46) angeschlossen ist,während die Ausgänge (Q, $\bar{Q}$) der Triggerschaltung mit den Eingängen zweier UND-Gatter (59, 6o) ver- bunden sind, deren andere Eingänge mit dem Abschaltsignal (A) für die Blitzröhre (6) belegt sind und deren Ausgänge (A1, A2) mit den Steueranschlüssen des Thyristors (55) beziehungsweise des GTO- Thyristors (8) verbunden sind.

17. Verfahren zum Betrieb einer Anordnung nach den Ansprüchen 15 und 16, dadurch gekennzeichnet, daß in einem Bereich großer Blitzröhren- ströme (t1 - t2) der Strom durch Zünden des Thyristors (55) und der damit verbundenen Entladung des Kondensators (5o) in bekannter Weise gelöscht wird und daß in einem Bereich niedriger Blitzröhrenströme (t0 - t1 und ab t2) die Abschaltung des Blitzröhrenstroms durch Kurzschalten des GTO-Thyristors erfolgt.

## FIG. 1

# FIG. 2

0018308

0018308

3/4

## FIG. 3

0018308

4/4

FIG.4

FIG.5a

FIG.5b

## EUROPÄISCHER RECHERCHENBERICHT

Europäisches
Patentamt

| | EINSCHLÄGIGE DOKUMENTE | | | KLASSIFIKATION DER ANMELDUNG (Int.Cl.3) |
|---|---|---|---|---|
| Kategorie | Kennzeichnung des Dokuments mit Angabe, soweit erforderlich, der maßgeblichen Teile | betrifft Anspruch | | |
| | US - A - 4 072 964 (POLAROID) <br> * Fig. 6 * <br> -- | 1 | | G 03 B 15/05 <br> G 03 B 7/16 <br> H 05 B 41/32 |
| | US - A - 4 007 398 (CANON) <br> * Fig. 1 bis 4 * <br> -- | 1-6, 15 | | |
| | DE - B2 - 2 244 635 (PONDER & BEST) <br> * Fig. 2 * <br> -- | 1-6, 15 | | RECHERCHIERTE SACHGEBIETE (Int. Cl.3) |
| | DE - A1 - 2 417 416 (ROLLEI) <br> * Fig.* <br> -- | 1-6, 15 | | G 03 B 7/00 <br> G 03 B 15/00 <br> H 05 B 41/00 |
| | DE - A1 - 2 417 242 (ROLLEI) <br> * Fig. 1 * <br> ---- | 1-6, 15 | | |

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 13-06-1980 | HOPPE |

EPA form 1503.1 06.78